# EUROPÄISCHE PATENTSCHRIFT

(11) **EP 4 008 049 B1**
(45) Veröffentlichungstag und Bekanntmachung des Hinweises auf die Patenterteilung: **09.09.2026**
(21) Anmeldenummer: 20739560.9
(22) Anmeldetag: 01.07.2020
(51) Int. Cl.: H02K 9/19, H02K 7/00, B60K 11/02

(54) **ELEKTRISCHE ANTRIEBSEINHEIT, HYBRIDMODUL UND ANTRIEBSANORDNUNG FÜR EIN KRAFTFAHRZEUG**
ELECTRIC DRIVE UNIT, HYBRID MODULE, AND DRIVE ASSEMBLY FOR A MOTOR VEHICLE
UNITÉ D'ENTRAÎNEMENT ÉLECTRIQUE, MODULE HYBRIDE ET ENSEMBLE D'ENTRAÎNEMENT POUR VÉHICULE AUTOMOBILE

(30) Priorität: 01.08.2019 DE 102019120785
(43) Veröffentlichungstag der Anmeldung: 08.06.2022
(73) Patentinhaber: Schaeffler Technologies AG & Co. KG, 91074 Herzogenaurach (DE)
(72) Erfinder: TRINKENSCHUH, Andreas, 77815 Bühl (DE); LEHMANN, Steffen, 76275 Ettlingen (DE); INEICHEN, Laurent, 67000 Strasbourg (FR)
(74) Vertreter: Schaeffler Technologies
(86) Internationale Anmeldenummer: PCT/DE2020/100573
(87) Internationale Veröffentlichungsnummer: WO 2021/018344

(56) Entgegenhaltungen:
- DE-A1- 102017 128 551
- JP-A- 2006 300 101
- JP-A- 2009 136 070
- JP-A- H09 154 258
- US-A1- 2019 081 537
- US-A1- 2019 190 350

## Beschreibung

Die Erfindung betrifft eine elektrische Antriebseinheit, insbesondere als Bestandteil eines Hybridmoduls oder eines Hybridgetriebes, ein Hybridmodul für ein Kraftfahrzeug, insbesondere für ein Hybridkraftfahrzeug, und eine Antriebsanordnung für ein Kraftfahrzeug.

Aus dem Stand der Technik sind diverse Antriebseinrichtungen oder Antriebseinheiten für Hybridfahrzeuge bekannt.

Die DE 10 2015 222 690 A1, die DE 10 2015 222 691 A1 und die WO 2017 084 887 A1 beschreiben ein Verfahren zum Steuern einer Antriebseinrichtung eines Hybridfahrzeuges mit einem Getriebe und ein mit einem Getriebe ausgestattetes Hybridfahrzeug, welches ausgebildet ist, das Verfahren durchzuführen.

Die DE 10 2015 222 692 A1, die DE 10 2015 222 694 A1, die WO 2017 084 888 A1 und die WO 2017 084 889 A1 beschreiben ein Verfahren zum Betreiben einer Antriebseinrichtung eines Hybridfahrzeuges mit einem Getriebe und ein mit einem Getriebe ausgestattetes Hybridfahrzeug, welches ausgebildet ist, das Verfahren durchzuführen.

Ein jeweiliges Hybridfahrzeug in den genannten Verfahren umfasst dabei eine Antriebseinrichtung mit einer Verbrennungsraftmaschine, eine erste Elektromaschine, eine zweite Elektromaschine und einem Akkumulator.

Gemäß den Verfahren der DE 10 2015 222 690 A1 ist die Antriebseinrichtung zum Antrieb des Hybridfahrzeugs in einem rein elektrischen Betrieb, einem seriellen Hybridbetrieb oder in einem parallelen Hybridbetrieb betreibbar.

Gemäß den Verfahren der DE 10 2015 222 691 A1 und der WO 2017 084 887 A1 ist für den Betrieb der Antriebseinrichtung ein leistungsorientierter Modus oder ein verbrauchsorientierter Modus auswählbar.

Gemäß der DE 10 2015 222 692 A1 und der WO 2017 084 888 A1 umfasst die Antriebseinrichtung weiterhin eine Hauptkupplung im Drehmomentübertragungspfad zwischen der Verbrennungskraftmaschine und einem Antriebsrad, wobei die Antriebseinrichtung in einem ersten Betriebsmodus von drei Betriebsmodi betrieben wird und zumindest einmal vom ersten Betriebsmodus in einen zweiten Betriebsmodus der drei Betriebsmodi wechselt. Die drei Betriebsmodi realisieren dabei einen rein elektrischen Betrieb, einen seriellen Hybridbetrieb oder einen parallelen Hybridbetrieb.

Gemäß der DE 10 2015 222 694 A1 und der WO 2017 084 889 A1 umfasst die Antriebseinrichtung weiterhin eine Hauptkupplung und ein Getriebe, welche im Drehmomentübertragungspfad zwischen der Verbrennungskraftmaschine und dem Antriebsrad angeordnet sind.

Die DE 10 2017 127 695 A1 offenbart wiederum einen Antriebsstrang für ein Hybridkraftfahrzeug, umfassend eine Getriebeeingangswelle, die über einen ersten Teilantriebsstrang mit einer ersten elektrischen Maschine und einer Verbrennungskraftmaschine verbunden ist und über einen zweiten Teilantriebsstrang mit einer zweiten elektrischen Maschine verbunden ist. Eine schaltbare Kupplung ist dabei zwischen den beiden Teilantriebssträngen angeordnet, so dass die erste elektrische Maschine und die zweite elektrische Maschine bei geschlossener Kupplung mit derselben Drehgeschwindigkeit drehen. Dabei ist vorgesehen, die erste und/oder zweite elektrische Maschine zu kühlen. Besonders ist es bevorzugt, wenn die Kühlung mittels einer Wasserkühlung aus einem Fahrzeug-Kühlkreis oder mittels einer Ölkühlung mit Getriebeöl aus dem Getriebe heraus ausgebildet ist. Die schaltbare Kupplung ist vorzugsweise als eine ölgekühlte Lamellenkupplung ausgebildet.

Bei einer bekannten Antriebseinrichtung eines Hybridfahrzeugs bzw. einem Antriebsstrang für ein Hybridkraftfahrzeug ist in der Regel vorgesehen, dass eine Fluidkühlung für zumindest eine, vorzugsweise beide Elektromaschinen realisiert ist. Weiterhin kann vorgesehen sein, auch Elemente wie Kupplungen mit Kühlfluid zu versorgen oder Schmierfluid zu einem Getriebe zu leiten. Konstruktiv vorteilhaft wird eine Leitung des Kühlfluids bzw. Schmierfluids zu den zu kühlenden bzw. zu schmierenden Elementen dabei derart realisiert, dass zumindest eine Antriebswelle als Hohlwelle eine innere Bohrung aufweist, welche als ein Kühl- und Schmierfluidkanal zumindest für das Kühlen einer Elektromaschine und das Kühlen oder Schmieren eines weiteren Elements, vorzugsweise für das Schmieren des Getriebes, vorgesehen ist. Insbesondere bei mehreren an den Kühl- und Schmierfluidkanal der Antriebswelle strömungstechnisch angeschlossenen Elementen, beispielsweise bei Versorgung von zwei Elektromaschinen, einer Kupplung und einem Getriebe, kann es zu einer ungenügenden Verteilung des Kühlfluids bzw. Schmierfluids kommen. Die strömungstechnisch mit dem Kühl- und Schmierfluidkanal der Antriebswelle verbundenen Elemente werden bei niedrigeren Drehzahlen der Antriebswelle zwar alle noch mit Kühlfluid bzw. Schmierfluid versorgt, bei einer Erhöhung der Drehzahl der Antriebswelle werden im Strömungspfad des Kühlfluids bzw. Schmierfluids weiter stromabwärts liegende Elemente von Kühlfluid bzw. Schmierfluid jedoch ggf. unterversorgt oder gar nicht mehr versorgt. Aufgrund der ungenügenden Kühlung treten z.B. Verlustleistungen in den jeweils betroffenen elektrischen Maschinen auf. Eine ungenügende Schmierung hat eine erhöhte Reibung und damit erhöhten Verschleiß zur Folge.

Die JP 2006 300101 A offenbart eine elektrische Antriebseinheit umfassend eine Antriebswelle sowie eine elektrische Rotationsmaschine, deren Rotor drehfest mit der Antriebswelle gekoppelt ist, wobei die Antriebswelle an einem ersten stirnseitigen Endbereich einen Fluid-Einlass aufweist sowie damit über einen zentralen Strömungskanal gekoppelt wenigstens einen ersten radialen Auslass und wenigstens einen endseitigen Auslass aufweist. Der erste radiale Auslass ist derart positioniert, dass durch diesen ersten radialen Auslass Fluid der elektrischen Rotationsmaschine zwecks deren Kühlung und/oder Schmierung zuführbar ist. Der zentrale Strömungskanal weist zumindest im Verlauf vom ersten radialen Auslass zum endseitigen Auslass eine Querschnittserweiterung auf, sodass im zentralen Strömungskanal befindliches Fluid im Bereich des endseitigen Auslasses auf Grund des vergrößerten Abstandes zur Rotationsachse der Antriebswelle einer erhöhten Zentrifugalkraft ausgesetzt ist.

Aus der US 2019 / 0190350 A1 ist bekannt, dass die Antriebswelle zwischen dem ersten radialen Auslass und dem endseitigen Auslass einen dritten radialen Auslass zur Ausbringung von Fluid zu einer zweiten elektrischen Rotationsmaschine aufweist.

Der vorliegenden Erfindung liegt die Aufgabe zugrunde, eine elektrische Antriebseinheit sowie ein damit ausgestattetes Hybridmodul und eine Antriebsanordnung zur Verfügung zu stellen, die in kostengünstiger Ausgestaltung einen optimalen Kühl- und/oder Schmierfluidtransport gewährleisten.

Die Aufgabe wird durch die erfindungsgemäße elektrische Antriebseinheit nach Anspruch 1 gelöst. Vorteilhafte Ausgestaltungen der elektrischen Antriebseinheit sind in den Unteransprüchen 2 bis 3 angegeben.

Ergänzend wird ein Hybridmodul für ein Kraftfahrzeug, welches die elektrische Antriebseinheit aufweist, gemäß Anspruch 4 zur Verfügung gestellt. Eine vorteilhafte Ausgestaltung des Hybridmoduls ist im Unteranspruch 5 angegeben.

Weiterhin wird eine Antriebsanordnung für ein Kraftfahrzeug, welche das Hybridmodul umfasst, gemäß Anspruch 6 zur Verfügung gestellt.

Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, die ergänzende Ausgestaltungen der Erfindung umfassen.

Die Begriffe "axial" und "radial" beziehen sich im Rahmen der vorliegenden Erfindung immer auf die Rotationsachse der Antriebswelle der elektrischen Antriebseinheit.

Die Erfindung betrifft eine elektrische Antriebseinheit, insbesondere als Bestandteil eines Hybridmoduls oder eines Hybridgetriebes. Die elektrische Antriebseinheit umfasst eine Antriebswelle sowie eine erste elektrische Rotationsmaschine, deren Rotor drehfest mit der Antriebswelle gekoppelt ist. Die Antriebswelle weist an einem ersten stirnseitigen Endbereich einen Fluid-Einlass auf sowie damit über einen zentralen Strömungskanal gekoppelt wenigstens einen ersten radialen Auslass und wenigstens einen endseitigen Auslass. Der erste radiale Auslass ist dabei derart positioniert, dass durch diesen ersten radialen Auslass Fluid der ersten elektrischen Rotationsmaschine zwecks deren Kühlung und/oder Schmierung zuführbar ist. Erfindungsgemäß ist vorgesehen, dass der zentrale Strömungskanal zumindest im Verlauf vom ersten radialen Auslass zum endseitigen Auslass eine Querschnittserweiterung aufweist, sodass im zentralen Strömungskanal befindliches Fluid im Bereich des endseitigen Auslasses auf Grund des vergrößerten Abstandes zur Rotationsachse der Antriebswelle einer erhöhten Zentrifugalkraft ausgesetzt ist. Die erhöhte Zentrifugalkraft im Bereich des endseitigen Auslasses bewirkt eine sichere Ausströmung des Fluids aus diesem Auslass trotz relativ großem Abstand zum Fluid-Einlass, und somit eine sichere Schmierung bzw. Kühlung des an diesem Auslass angeordneten Aggregats.

Der Fluid-Einlass am ersten stirnseitigen Endbereich der Antriebswelle dient somit zur Zuführung eines Kühl- und/oder Schmiermittels.

Das bedeutet, dass die Antriebswelle durch die Ausbildung mit einem zentralen Strömungskanal somit als eine Hohlwelle ausgeführt ist.

Der zentrale Strömungskanal verläuft dabei insbesondere koaxial zur Rotationsachse der Antriebswelle. Die Rotationsachse der Antriebswelle entspricht dabei auch der Rotationsachse der ersten elektrischen Rotationsmaschine, also der Achse, um welche der Rotor der ersten elektrischen Rotationsmaschine drehbar ist.

Der endseitige Auslass muss dabei nicht zwingend am stirnseitigen Endbereich der Antriebswelle angeordnet sein, jedoch ist das der Auslass, der am dichtesten an dem dem Fluid-Einlass gegenüberliegenden Endbereich angeordnet ist. Es kann aber auch vorgesehen sein, dass der endseitige Auslass einem stirnseitigen Auslass der Antriebswelle an dem dem Fluid-Einlass gegenüberliegenden Endbereich entspricht. In einer weiteren Ausführungsform ist der Querschnitt des zentralen Strömungskanals rund und die Differenz Di zwischen dem Durchmesser des zentralen Strömungskanals am Fluid-Einlass und dem Durchmesser des zentralen Strömungskanals am endseitigen Auslass steht in Bezug zur Länge L des zentralen Strömungskanals zwischen dem Fluid-Einlass und dem endseitigen Auslass in folgendem Verhältnis: $Di / L = 0 , 4 … 5 .$

Gemäß einer weiteren vorteilhaften Ausführungsform ist die Querschnittserweiterung zumindest abschnittsweise über die Länge des zentralen Strömungskanals durch einen kegelstumpfförmigen Hohlraum ausgebildet.

Das bedeutet, dass in einer Ausführungsform der zentrale Strömungskanal im Wesentlichen die Form eines Konus bzw. eines Segments davon aufweist, wobei dieser Kegelstumpf einem Kegel ohne Spitze entspricht.

In einer speziellen Ausführungsform kann auch vorgesehen sein, dass der zentrale Strömungskanal komplett kegelförmig ausgebildet ist.

Der kegelstumpfförmige Hohlraum kann sich dabei vom Fluid-Einlass oder auch beabstandet zum Fluid-Einlass in Richtung auf den ersten radiale Auslass erstrecken, wobei der erste radiale Auslass direkt an eine Wandung des kegelstumpfförmigen Hohlraums anschließen kann oder aber auch beabstandet dazu positioniert ist. In dieser letztgenannten Ausführungsform ist demzufolge nicht ausgeschlossen, dass zwischen einem Endbereich des kegelstumpfförmigen Hohlraums und dem ersten radialen Auslass ein zylindrischer Abschnitt des Strömungskanals ausgebildet ist.

Erfindungsgemäß ist die Querschnittserweiterung zumindest abschnittsweise über die Länge des zentralen Strömungskanals durch wenigstens eine stufenweise Erweiterung des zentralen Strömungskanals realisiert.

Entsprechend umfasst der Strömungskanal in dieser Ausgestaltung wenigstens zwei zylinderförmige Abschnitte, die unterschiedlich große Querschnitte bzw. Durchmesser aufweisen, wobei der Abschnitt mit dem größeren Querschnitt an der Seite des endseitigen Auslasses angeordnet ist.

Es soll nicht ausgeschlossen werden, dass der Strömungskanal durch eine Kombination eines kegelstumpfförmigen Hohlraum-Abschnitts mit einem abgestuften Hohlraum-Abschnitt ausgeführt ist. Eine solche Ausführungsform gehört jedoch nicht zur Erfindung.

Eine derartige stufenweise Erweiterung des Strömungskanals ist gegenüber einer Ausbildung des Strömungskanals durch einen kegelstumpfförmigen Hohlraum fertigungstechnisch einfacher zu realisieren.

Gemäß einem weiteren Aspekt der Erfindung weist die Antriebswelle zwischen dem ersten radialen Auslass und dem endseitigen Auslass einen zweiten radialen Auslass zur Ausbringung von Fluid zu einer Kupplungseinrichtung auf.

Erfindungsgemäß weist die Antriebswelle zwischen dem ersten radialen Auslass und dem endseitigen Auslass einen dritten radialen Auslass zur Ausbringung von Fluid zu einer zweiten elektrischen Rotationsmaschine auf.

Bei einem kegelstumpfförmig ausgeführten zentralen Strömungskanal ist vorzugsweise vorgesehen, dass alle Auslässe an einer keglig verlaufenden Wand des zentralen Strömungskanals ausgebildet sind.

Bei einem gestuft ausgeführten zentralen Strömungskanal ist vorzugsweise vorgesehen, dass ein jeder Auslass in einem Bereich des zentralen Strömungskanals angeordnet ist, dessen Größe der Querschnittsfläche sich von den Größen der Querschnittsflächen der Bereiche, in denen die jeweils anderen Auslässe angeordnet sind, unterscheidet.

Insbesondere kann in einer Ausführungsform der elektrischen Antriebseinheit zumindest einer der Auslässe durch eine Mehrzahl von sich radial vom Strömungskanal erstreckenden Bohrungen ausgebildet sein.

Erfindungsgemäß ist der endseitige Auslass an einem zweiten stirnseitigen Endbereich der Antriebswelle ausgebildet.

Dabei dient der endseitige Auslass zur im Wesentlichen axialen Ausbringung bzw. Zuführung von Fluid zu einem mit der Antriebswelle zumindest mittelbar gekoppelten Getriebe.

In Strömungsrichtung des Fluids vor dem endseitigen Auslass kann im Strömungskanal eine Drossel angeordnet sein zur Reduzierung des Volumenstroms des Fluids in Richtung auf den endseitigen Auslass bei bestimmten Drehzahl- und/oder Druckverhältnissen.

Die erfindungsgemäße elektrische Antriebseinheit weist den Vorteil auf, dass mittels der Querschnittserweiterung im Verlauf des Strömungskanals zumindest zwischen dem ersten radialen Auslass und dem endseitigen Auslass im zentralen Strömungskanal geführtes Fluid zuverlässig an die strömungstechnisch mit dem zentralen Strömungskanal verbundenen Elemente bzw. Aggregate geleitet wird.

Die aus der Querschnittserweiterung resultierenden und mit dem Verlauf vom ersten radialen Auslass zum endseitigen Auslass zunehmenden Zentrifugalkräfte bei Rotation der Antriebswelle begünstigen einen Transport des geführten Fluids im Strömungskanal zum endseitigen Auslass hin.

Einer ungenügenden Verteilung von Fluid zur Kühlung bzw. Schmierung zwischen den Auslässen, also einer Verteilung, in welcher dem endseitigen Auslass insbesondere bei hohen Drehzahlen zu wenig Fluid zugeführt wird, kann somit entgegengewirkt werden.

Des Weiteren wird erfindungsgemäß ein Hybridmodul für ein Kraftfahrzeug, insbesondere für ein Hybridkraftfahrzeug, zum Ankoppeln einer Verbrennungskraftmaschine zur Verfügung gestellt, das eine erfindungsgemäße elektrische Antriebseinheit sowie eine Anschlusseinrichtung zum Anschluss einer Verbrennungskraftmaschine aufweist.

Diese Anschlusseinrichtung kann insbesondere an der Antriebswelle, zum Beispiel in Form einer Keilwellenverzahnung, ausgeführt sein.

Im Sinne der vorliegenden Erfindung kann unter einem Hybridmodul auch ein sogenanntes Hybridgetriebe verstanden werden, welches neben den Aggregaten des typischen Hybridmoduls zumindest noch eine Getriebeübersetzung aufweist. Insofern das Hybridmodul selbst keine Getriebekomponente aufweist, kann es dazu ausgestaltet sein, mit einem Getriebe zur Übertragung eines Drehmoments gekoppelt zu werden.

In einer Ausführungsform des Hybridmoduls umfasst dieses des Weiteren eine Kupplungseinrichtung und/oder eine zweite elektrische Rotationsmaschine, wobei die Kupplungseinrichtung bzw. die zweite elektrische Rotationsmaschine derart auf der Antriebswelle angeordnet ist, dass mittels wenigstens eines radialen Auslasses der Antriebswelle der Kupplungseinrichtung bzw. der zweiten elektrischen Rotationsmaschine Fluid zwecks Kühlung und/oder Schmierung der Kupplungseinrichtung bzw. der zweiten elektrische Rotationsmaschine zuführbar ist. So ist zum Beispiel vorgesehen, dass eine auch als K0 bezeichnete Kupplungseinrichtung mit einer Eingangsseite fest mit der Antriebswelle verbunden ist und über einen zweiten radialen Auslass der Antriebswelle mit Fluid anströmbar ist zwecks Kühlung und/oder Schmierung.

Eine Ausgangsseite der Kupplungseinrichtung kann mit einer Abtriebswelle des Hybridmoduls gekoppelt sein. Ein Rotor der zweiten elektrischen Rotationsmaschine kann drehfest mit einer derartigen Abtriebswelle verbunden sein. Dabei kann ein dritter radialer Auslass der Antriebswelle derart positioniert sein, dass die zweite elektrische Rotationsmaschine über den dritten radialen Auslass mit Fluid anströmbar ist zwecks Kühlung und/oder Schmierung. Zu diesem Zweck kann die Abtriebswelle ebenfalls mit Öffnungen oder Durchbrüchen versehen sein, um eine Fluid-Strömung vom dritten radialen Auslass zur zweiten elektrischen Rotationsmaschine zu gewährleisten.

Insbesondere kann vorgesehen sein, dass die Antriebswelle und Abtriebswelle koaxial zueinander verlaufen, was entsprechend bedeutet, dass der Rotor der ersten Rotationsmaschine und der Rotor der zweiten Rotationsmaschine um die gleiche Rotationsachse drehbar sind.

Dabei kann die Abtriebswelle die Antriebswelle radial bereichsweise umgeben. Der dritte Auslass der Antriebswelle kann dabei in einem Abschnitt der Antriebswelle angeordnet sein, welcher von der Abtriebswelle radial überdeckt ist. Ein aus dem dritten radialen Auslass der Antriebswelle aus der radialen Außenseite der Antriebswelle austretendes Fluid kann somit unmittelbar an die radiale Innenseite der Abtriebswelle im Bereich einer Öffnung oder eines Durchbruchs in der Abtriebswelle fließen, um von dort durch die Öffnung oder den Durchbruch an die zweite Rotationsmaschine zu gelangen.

Weiterhin kann realisiert sein, dass auch der zweite Auslass der Antriebswelle von der Abtriebswelle radial umgeben ist. Vorzugsweise kann ein axialer Endbereich der Abtriebswelle den zweiten Auslass der Antriebswelle dabei derartig radial umgeben, dass dieser axiale Endbereich einen Abschnitt einer Fluidführung zwecks axialer Führung von Fluid zur Kupplungseinrichtung ausbildet.

Die vorliegende Erfindung ist dabei nicht auf die Anordnung bzw. Realisierung aller genannter Auslässe eingeschränkt, insbesondere nicht auf eine axiale Reihenfolge dieser Auslässe entsprechend ihrer Nummerierung.

Weiterhin wird erfindungsgemäß eine Antriebsanordnung für ein Kraftfahrzeug, umfassend ein erfindungsgemäßes Hybridmodul sowie ein Antriebsaggregat, insbesondere eine Verbrennungskraftmaschine, sowie ein Getriebe zur Verfügung gestellt, wobei das Hybridmodul mit einer Eingangsseite mit dem Antriebsaggregat und mit einer Ausgangsseite mit dem Getriebe mechanisch gekoppelt ist.

Die oben beschriebene Erfindung wird nachfolgend vor dem betreffenden technischen Hintergrund unter Bezugnahme auf die zugehörigen Zeichnungen, welche bevorzugte Ausgestaltungen zeigen, detailliert erläutert. Die Erfindung wird durch die rein schematischen Zeichnungen in keiner Weise beschränkt, wobei anzumerken ist, dass die in den Zeichnungen gezeigten Ausführungsbeispiele nicht auf die dargestellten Maße eingeschränkt sind. Es ist dargestellt in
- Fig. 1:: eine vereinfachte, geschnittene Seitenansicht einer Antriebswelle einer elektrischen Antriebseinheit gemäß einer ersten Ausführungsform, die nicht zur Erfindung gehört,
- Fig. 2:: eine perspektivische, geschnittene Ansicht einer Antriebswelle einer elektrischen Antriebseinheit gemäß einer zweiten Ausführungsform, die nicht zur Erfindung gehört,
- Fig. 3:: eine vereinfachte, geschnittene Seitenansicht einer Antriebswelle einer erfindungsgemäßen elektrischen Antriebseinheit gemäß einer dritten Ausführungsform,
- Fig. 4:: eine perspektivische, geschnittene Ansicht der Antriebswelle der erfindungsgemäßen elektrischen Antriebseinheit gemäß einer vierten Ausführungsform und
- Fig. 5:: eine geschnittene Seitenansicht eines Hybridmoduls mit einer erfindungsgemäßen elektrischen Antriebseinheit.

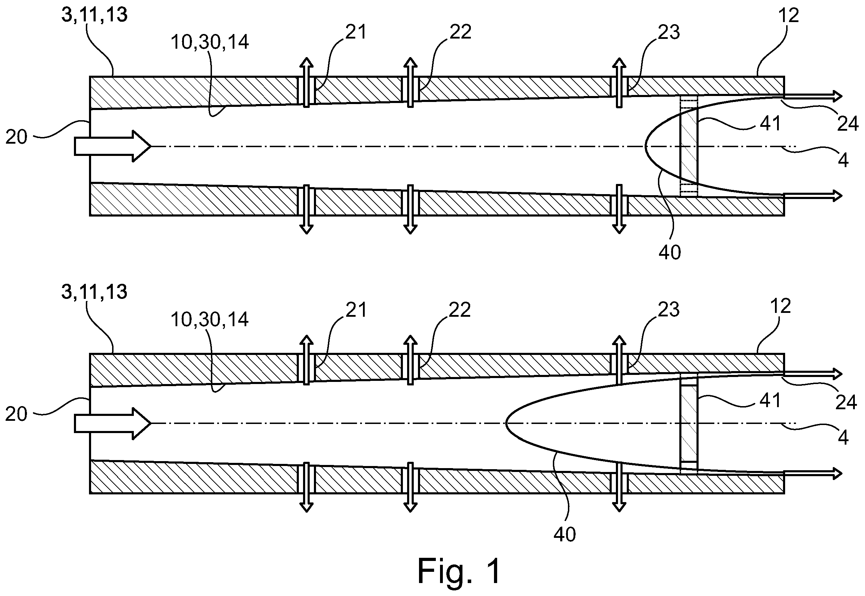

In Fig. 1 ist eine vereinfachte, geschnittene Seitenansicht einer Antriebswelle 3 einer elektrischen Antriebseinheit eines Hybridmoduls gemäß einer ersten Ausführungsform dargestellt.

Die Antriebswelle 3 ist dabei als eine Hohlwelle ausgestaltet und weist entsprechend einen zentralen Strömungskanal 10 koaxial zur Rotationsachse 4 der Antriebswelle 3 auf. Zwecks Zuführung eines Fluids in den zentralen Strömungskanal 10 weist die Antriebwelle 3 an einem ersten stirnseitigen Endbereiche 11 einen Fluid-Einlass 20 auf, durch welchen Fluid in den zentralen Strömungskanal 10 einführbar ist. Das im zentralen Strömungskanal 10 transportierbare Fluid dient dabei der Schmierung und/oder Kühlung von Aggregaten der elektrischen Antriebseinheit bzw. eines Hybridmoduls (hier nicht dargestellt), in welchem die elektrische Antriebseinheit integriert ist. Die Antriebswelle 3 weist zudem einen ersten radialen Auslass 21, einen zweiten radialen Auslass 22, einen dritten radialen Auslass 23 sowie einen endseitigen Auslass 24 auf. Der endseitige Auslass 24 ist dabei in einem zweiten stirnseitigen Endbereich 12 der Antriebswelle 3 angeordnet, welcher dem ersten stirnseitigen Endbereiche 11 axial gegenüber liegt.

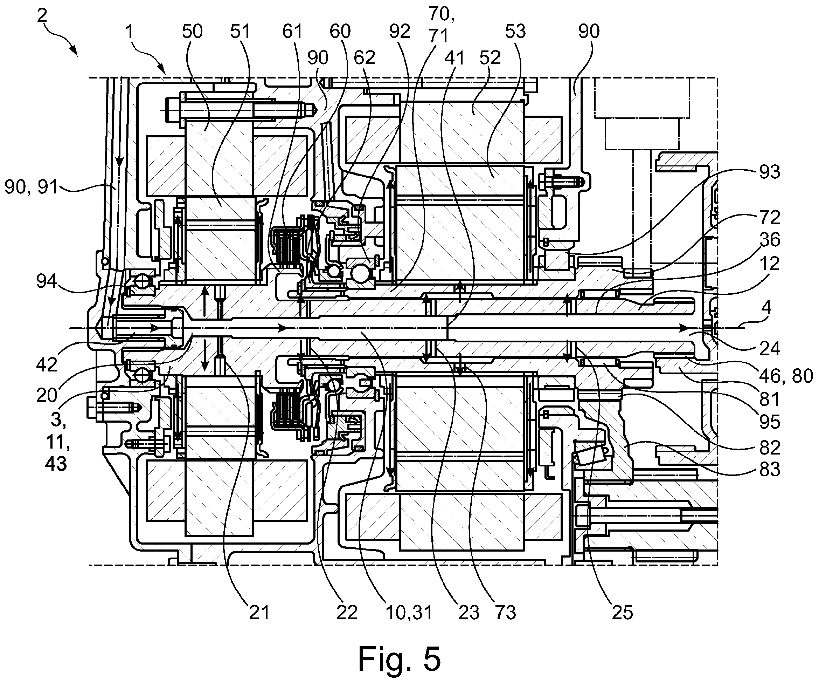

Mit einem jeweiligen Auslass 21, 22, 23, 24 der Antriebswelle 3 ist ein sich im zentralen Strömungskanal 10 befindliches Fluid zu einem jeweiligen Aggregat der elektrischen Antriebseinheit bzw. des Hybridmoduls transportierbar. Der erste Auslass 21 dient der strömungstechnischen Verbindung des zentralen Strömungskanals 10 mit einer ersten Rotationsmaschine der elektrischen Antriebseinheit. Der zweite Auslass 22 dient der strömungstechnischen Verbindung des zentralen Strömungskanals 10 mit einer Kupplungseinrichtung des Hybridmoduls. Der dritte Auslass 23 dient der strömungstechnischen Verbindung des zentralen Strömungskanals 10 mit einer zweiten Rotationsmaschine des Hybridmoduls. Der endseitige Auslass 24 dient der strömungstechnischen Verbindung des zentralen Strömungskanals 10 mit einem Getriebe des Hybridmoduls. Eine diesbezügliche Erläuterung erfolgt weitern unten in Bezug auf Figur 5.

Der Fluss bzw. die Flussrichtung des Fluids in der Antriebswelle 3 ist in Form von Pfeilen verdeutlicht.

Der Fluid-Einlass 20 sowie der endseitige Auslass 24 entsprechen dabei einer jeweils stirnseitigen Öffnung der Antriebswelle 3, wobei der erste, zweite und dritte Auslass 21, 22, 23 jeweils als eine radial verlaufende Öffnung realisiert sind, welche von der radialen Innenseite 14 der Antriebswelle 3 bis zur radialen Außenseite 13 der Antriebswelle 3 hindurchführt.

Gemäß der hier dargestellten ersten Ausführungsform der Antriebswelle 3 entspricht der zentrale Strömungskanal 10 der Antriebswelle 3 einem kegelstumpfförmigen Hohlraum 30. Dabei nimmt der Durchmesser bzw. der Querschnitt des runden, zentralen Strömungskanals 10 ausgehend vom Fluid-Einlass 20 in Richtung auf den endseitigen Auslass 24 stetig zu. Dementsprechend ist der Durchmesser bzw. der Querschnitt des runden, zentralen Strömungskanals 10 am Fluid-Einlass 20 am kleinsten und am endseitigen Auslass 24 am größten.

In einer axialen Position zwischen dem dritten radialen Auslass 23 und dem endseitigen Auslass 24 weist die Antriebswelle 3 zudem eine Drossel 41 auf zwecks Begrenzung eines maximalen Fluidflusses zum endseitigen Auslass 24.

Ferner zeigt Figur 1 die Antriebswellen 3 in unterschiedlichen Anwendungsfällen in zwei Darstellungen.

Die obere Darstellung entspricht einem Anwendungsfall, in welchem die Antriebswelle 3 mit einer niedrigen Drehgeschwindigkeit rotiert. Die untere Darstellung hingegen entspricht einem Anwendungsfall, in welchem die Antriebswelle 3 mit einer hohen Drehgeschwindigkeit rotiert. Eine in dem jeweiligen zentralen Strömungskanal 10 dargestellte Fluidverteilung 40 zeigt dabei, wie sich das in dem zentralen Strömungskanal 10 befindliche Fluid im jeweiligen Anwendungsfall verhält. Zu erkennen ist dabei, dass sowohl bei niedriger Drehgeschwindigkeit als auch bei hoher Drehgeschwindigkeit eine genügende Verteilung des Fluids an alle jeweiligen Auslässe 21, 22, 23, 24 realisiert ist. Die kegelstumpfförmige Ausgestaltung des zentralen Strömungskanals 10 sorgt dafür, dass in den Fluid-Einlass 20 eingetretenes Fluid durch die Querschnittserweiterung und die damit verbundene zunehmende Entfernung zur Rotationsachse 4 entsprechend mit stetig zunehmender Zentrifugalkraft beaufschlagt wird, was eine Leitung des Fluids in Richtung des endseitigen Auslasses 24 begünstigt.

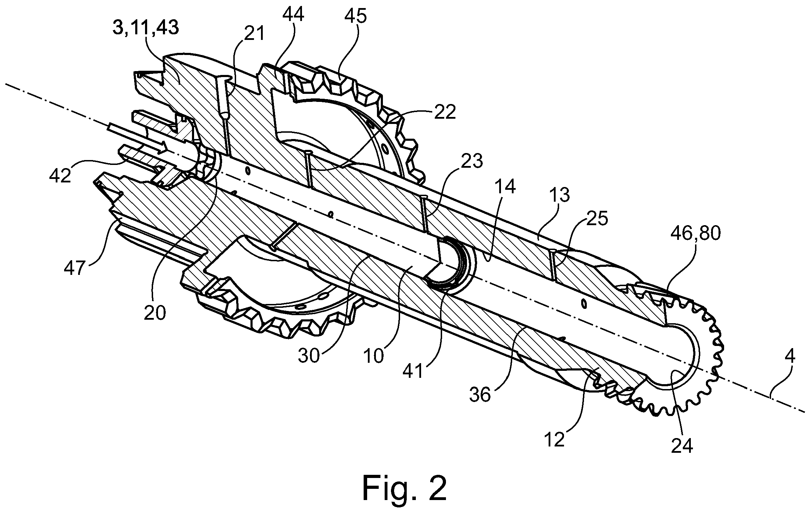

Fig. 2 zeigt eine perspektivische, geschnittene Ansicht der Antriebswelle 3 der elektrischen Antriebseinheit eines Hybridmoduls gemäß einer zweiten Ausführungsform.

Die Ausgestaltung der Antriebswelle 3 als eine Hohlwelle mit einem zentralen Strömungskanal 10 und entspricht weitestgehend der in Figur 1 gezeigten Antriebswelle 3. An einem ersten stirnseitigen Endbereich 11 ist ein Fluid-Einlass 20 ausgebildet, an einem zweiten stirnseitigen Endbereiche 12 ist ein endseitiger Auslass 24 ausgebildet und axial zwischen dem Fluid-Einlass 20 und dem endseitigen Auslass 24 weist die Antriebswelle 3 einen ersten radialen Auslass 21, einen zweiten radialen Auslass 22 und einen dritten radialen Auslass 23 auf. Auch eine Drossel 41 an einer axialen Position zwischen dem dritten radialen Auslass 23 und dem endseitigen Auslass 24 ist hier realisiert.

Der Zweck des Fluid-Einlasses 20, eines jeweiligen Auslasses 21, 22, 23, 24 und der Drossel 41 in der zweiten Ausführungsform der Antriebswelle 3 ist dabei äquivalent zum Zweck in der ersten Ausführungsform der Antriebswelle 3.

Die zweite Ausführungsform der Antriebswelle 3 weist jedoch neben den genannten Auslässen 21, 22, 23, 24 noch einen weiteren Auslass 25 auf, welcher axial zwischen dem dritten Auslass 23 und dem endseitigen Auslass 24 angeordnet ist und den zentralen Strömungskanal 10 strömungstechnisch mit einem weiteren Aggregat der elektrischen Antriebseinheit bzw. des Hybridmoduls, wie z.B. einer Anschlusseinrichtung 80 zum Zweck der Kopplung der Antriebswelle 3 mit einer Verbrennungskraftmaschine einer das Hybridmodul umfassenden Antriebsanordnung, verbindet.

Entgegen der Ausgestaltung der Antriebswelle 3 gemäß der ersten Ausführungsform, bildet ein kegelstumpfförmiger Hohlraum 30 hier nur einen Abschnitt des gesamten zentralen Strömungskanals 10 aus. Wie in der ersten Ausführungsform, nimmt der Querschnitt des runden, zentralen Strömungskanals 10 ausgehend vom Fluid-Einlass 20 in Richtung des endseitigen Auslasses 24 stetig zu, jedoch nur bis zur axialen Position der Drossel 41. Der restliche zentrale Strömungskanal 10 ist als ein zylinderförmiger Endabschnitt 36 ausgeführt. Der Fluid-Einlass 20, der erste radiale Auslass 21, der zweite radiale Auslass 22 und der dritte radiale Auslass 23 sind dabei am Abschnitt des zentralen Strömungskanals 10 angeordnet, der als kegelstumpfförmiger Hohlraum 30 ausgeführt ist, wohingegen der weitere Auslass 24 und der endseitige Auslass 24 am zylinderförmigen Endabschnitt 36 des zentralen Strömungskanals 10 angeordnet sind.

Der Durchmesser bzw. der Querschnitt des runden, zentralen Strömungskanals 10 im zylinderförmigen Endabschnitt 36 ist dabei größer als der größte Durchmesser bzw. der Querschnitt des kegelstumpfförmigen Hohlraums 30 des runden, zentralen Strömungskanals 10, so dass sich insgesamt eine gestufte Querschnittskontur des zentralen Strömungskanals 10 ergibt.

Im ersten stirnseitigen Endbereich 11 der Antriebswelle 3 ist ein Zufuhrelement 42 angeordnet. Das Zufuhrelement 42 dient dabei der strömungstechnischen Verbindung einer Fluidzufuhrleitung (hier nicht dargestellt) des Hybridmoduls mit dem zentralen Strömungskanal 10 bzw. mit dem ersten Fluid-Einlass 20.

Die Antriebswelle 3 weist zudem im ersten stirnseitigen Endbereich 11 eine radiale Aufweitung 43 auf, welche zur Anordnung eines Rotors der ersten Rotationsmaschine auf der Antriebswelle 3 dient. Radial außen umfasst diese Aufweitung 43 eine axiale Nut 47, zum Zweck einer Verdrehsicherung zwischen Antriebswelle 3 und Rotors der ersten Rotationsmaschine. Ein Vorsprung 44 der radialen Aufweitung 43, auf der dem Zufuhrelement 42 axial abgewandten Seite der radialen Aufweitung 43, bildet radial außen eine Lamellenführung 45 in Form einer Verzahnung mit axial verlaufenden Zähnen aus. Auf dieser Lamellenführung 45 sind Reiblamellen der Kupplungseinrichtung zwecks Schließung und Öffnung der Kupplungseinrichtung axial führbar. Der Vorsprung 44 bzw. die radiale Aufweitung 43 fungieren damit als Eingangsseite 61 der Kupplungseinrichtung.

Im zweiten stirnseitigen Endbereich 12 der Antriebswelle 3 umfasst diese auf ihrer radialen Außenseite 13 weiterhin eine Keilwellenverzahnung 46 einer Anschlusseinrichtung 80 zum Anschluss der Antriebswelle 3 an die Verbrennungskraftmaschine.

Ein durch das Zufuhrelement 42 und den Fluid-Einlass 20 in den zentralen Strömungskanal 10 eingeführtes Fluid wird zunächst in den Abschnitt des kegelstumpfförmigen Hohlraums 30 geleitet. Hier wird das Fluid durch die Querschnittserweiterung in der Bewegung durch den zentralen Strömungskanal 10 in Richtung des endseitigen Auslasses 24 unterstützt. Damit wird gewährleistet, dass an die Drossel 41 herangeführtes Fluid auch bei hohen Drehgeschwindigkeiten der Antriebswelle 3 einen genügend großen Volumenstrom aufweist, so dass das an der Drossel 41 vorbei und in den zylinderförmigen Endabschnitt 36 eingeleitete Fluid ausreicht, um eine Kühlung und/oder Schmierung eines weiteren Aggregats durch den weiteren Auslass 25 und des Getriebes durch den endseitigen Auslass 24 zu gewährleisten.

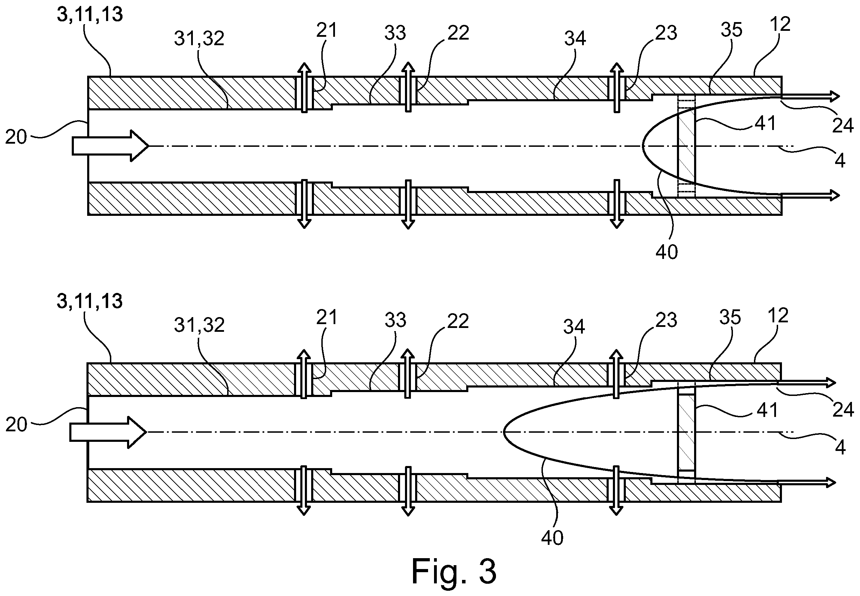

In Fig. 3 ist eine vereinfachte, geschnittene Seitenansicht einer Antriebswelle 3 einer erfindungsgemäßen elektrischen Antriebseinheit gemäß einer dritten Ausführungsform gezeigt.

Die hier in Figur 3 gezeigte Antriebswelle 3 gemäß der dritten Ausführungsform ähnelt dabei der in Figur 1 dargestellten Antriebswelle 3 gemäß der ersten Ausführungsform. Unterschiedlich ist lediglich, dass der zentrale Strömungskanal 10 hier gemäß der dritten Ausführungsform nicht als ein kegelstumpfförmiger Hohlraum, sondern in Form einer stufenweisen Erweiterung 31 realisiert ist.

Die stufenweise Erweiterung 31 weist dabei einen ersten bis vierten zylinderförmigen Abschnitt 32, 33, 34, 35 auf, welche jeweils unterschiedlich große Durchmesser bzw. Querschnitte aufweisen.

Ein erster zylinderförmiger Abschnitt 32 ist am ersten stirnseitigen Endbereich 11 der Antriebswelle 3 realisiert und hat den kleinsten Durchmesser bzw. Querschnitt der zylinderförmigen Abschnitte 32, 33, 34, 35. Der Fluid-Einlass 20 ist hier durch den ersten zylinderförmigen Abschnitt 32 ausgebildet, wobei der erste radiale Auslass 21 strömungstechnisch mit dem ersten zylinderförmigen Abschnitt 32 verbunden bzw. an diesem angeordnet ist. Axial daneben ist der zweite zylinderförmige Abschnitt 33 angeordnet, mit einem größeren Durchmesser bzw. Querschnitt als der erste zylinderförmige Abschnitt 32, und strömungstechnisch axial mit dem zweiten radialen Auslass 22 verbunden. Dazu wiederum axial benachbart in Richtung der Flussrichtung des Fluids ist der dritte zylinderförmige Abschnitt 34 angeordnet, mit einem größeren Durchmesser bzw. Querschnitt als der zweite zylinderförmige Abschnitt 33, und strömungstechnisch axial mit dem dritten radialen Auslass 23 verbunden. Der vierte zylinderförmige Abschnitt 35 ist am zweiten stirnseitigen Endbereich 12 der Antriebswelle 3 angeordnet und weist einen größeren Durchmesser bzw. Querschnitt auf als der dritte zylinderförmige Abschnitt 34, und hat somit den größten Durchmesser bzw. Querschnitt der zylinderförmigen Abschnitte 32, 33, 34, 35, wobei der endseitige Auslass 24 durch den vierten zylinderförmigen Abschnitt 35 ausgebildet ist und die Drossel 41 im vierten zylinderförmigen Abschnitt 35 angeordnet ist. Entsprechend weist der zentrale Strömungskanal 10 hier ebenfalls eine Querschnittserweiterung auf, ausgehend vom Fluid-Einlass 20 entlang der Fluidflussrichtung in Richtung auf den endseitigen Auslass 24.

Äquivalent zu Figur 1 zeigt auch Figur 3 die Antriebswellen 3 in zwei Darstellungen in unterschiedlichen Anwendungsfällen, nämlich mit einer oberen Darstellung, welche eine niedrige Drehgeschwindigkeit der Antriebswelle 3 beschreibt, und einer unteren Darstellung, welche hingegen eine hohe Drehgeschwindigkeit der Antriebswelle 3 beschreibt.

Eine dargestellte Fluidverteilung 40 in den jeweiligen zentralen Strömungskanälen 10 zeigt, dass auch hier eine genügende Verteilung des Fluids an alle Auslässe 21, 22, 23, 24 realisiert ist.

Die unterschiedlichen und in Richtung der Fluidflussrichtung immer größer werdenden Durchmesser bzw. Querschnitte der zylinderförmigen Abschnitte 32, 33, 34, 35 sorgen dafür, dass in den Fluid-Einlass 20 eingetretenes Fluid mit Bewegung in Richtung des endseitigen Auslasses 24 durch die Querschnittserweiterung und die damit verbundene zunehmende Entfernung zur Rotationsachse 4 entsprechend mit stufenweise zunehmender Zentrifugalkraft beaufschlagt wird, was eine Leitung des Fluids in Richtung des endseitigen Auslasses 24 begünstigt.

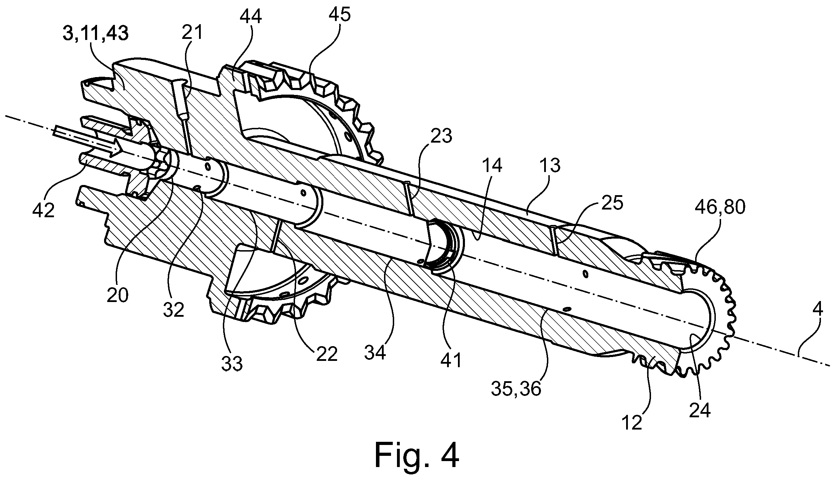

In Fig. 4 ist eine perspektivische, geschnittene Ansicht der Antriebswelle 3 der erfindungsgemäßen elektrischen Antriebseinheit gemäß einer vierten Ausführungsform dargestellt.

Die vierte Ausführungsform der Antriebswelle 3 bzw. die Figur 4 sind dabei weitestgehend gleich zu der zweiten Ausführungsform der Antriebswelle 3 bzw. der Figur 2.

Der einzige Unterschied besteht darin, dass der Abschnitt des zentralen Strömungskanals 10, der in der Antriebswelle 3 der Figur 2 als kegelstumpfförmiger Hohlraum ausgeführt ist, hier stattdessen einer stufenweisen Erweiterung 31 entspricht, ähnlich wie sie auch in der dritten Ausführungsform bzw. der Figur 3 dargestellt ist.

Anders als zur dritten Ausführungsform bzw. der Figur 3 ist die Drossel 41 jedoch nicht im vierten zylinderförmigen Abschnitt 35 angeordnet, sondern am dem dem vierten zylinderförmigen Abschnitt 35 zugewandten Ende des dritten zylinderförmigen Abschnitts 34. Der vierte zylinderförmige Abschnitt 35 entspricht demnach einem zylinderförmigen Endabschnitt 36 des zentralen Strömungskanals 10.

Fig. 5 zeigt eine geschnittene Seitenansicht eines Hybridmoduls 2 mit einer erfindungsgemäßen elektrischen Antriebseinheit 1.

Die elektrische Antriebseinheit 1 ist dabei Bestandteil des Hybridmoduls 2 und umfasst eine erfindungsgemäß ausgestaltete Antriebswelle 3 sowie eine erste elektrische Rotationsmaschine 50, deren Rotor 51 drehfest mit der Antriebswelle 3 gekoppelt ist. Das Hybridmodul 2 umfasst neben der elektrischen Antriebseinheit 1 eine zweite Rotationsmaschine 52, deren Rotor 53 auf einer Abtriebswelle 70 angeordnet ist, und eine Kupplungseinrichtung 60.

Die Antriebswelle 3 ist identisch zu der in Figur 4 beschriebenen Antriebswelle 3 gemäß der vierten Ausführungsform ausgestaltet, wobei die Antriebswelle 3 bereichsweise von der ebenfalls als Hohlwelle ausgestalteten Abtriebswelle 70 radial umgeben ist. Die Antriebswelle 3 und die Abtriebswelle 70, und damit auch die Rotoren 51, 53 der beiden elektrischen Rotationsmaschinen 50, 52, sind somit koaxial zueinander angeordnet und rotieren um die gleiche Rotationsachse 4.

Dabei ist der dritte radiale Auslass 23 der Antriebswelle 3 radial von der Abtriebswelle 70 überdeckt, wobei in der Abtriebswelle 70 zum Zweck der Leitung eines Fluids vom zentralen Strömungskanal 10 zur zweiten elektrischen Rotationsmaschine 52 eine radiale Öffnung 73 vorgesehen ist, durch welche das durch den dritten radialen Auslass 23 austretende Fluid an die zweite elektrische Rotationsmaschine 52 weiterführbar ist.

Die Abtriebswelle 70 ist an ihrem ersten axialen Endabschnitt 71 mit der Kupplungseinrichtung 60 verbunden und bildet dabei die Ausgangsseite 62 der Kupplungseinrichtung 60, wobei die Eingangsseite 61 der Kupplungseinrichtung 60 von der Antriebswelle 3 ausgebildet ist.

Weiterhin ist die Abtriebswelle 70 an ihrem ersten axialen Endabschnitt 71 über ein erstes Wälzlager 92 in einem Hybridgehäuse 90 des Hybridmoduls 2 gelagert und an ihrem zweiten axialen Endabschnitt 72 über ein zweites Wälzlager 93 ebenfalls im Hybridgehäuse 90 des Hybridmoduls 2 gelagert. Die Antriebswelle 3 stützt sich an ihrem ersten stirnseitigen Endbereich 11 über ein drittes Wälzlager 94 am Hybridgehäuse 90 des Hybridmoduls 2 ab und stützt sich an ihrem zweiten stirnseitigen Endbereich 12 über ein viertes Wälzlager 95 radial innen am zweiten axialen Endabschnitt 72 der Abtriebswelle 70 ab. Damit ist die Abtriebswelle 70 direkt im Hybridgehäuse 90 gelagert, wobei die Antriebswelle 3 teilweise über die Abtriebswelle 70 im Hybridgehäuse 90 gelagert ist.

Auf der der zweiten Rotationsmaschine 52 axial abgewandten Seite der ersten Rotationsmaschine 50 verläuft in der Wandung des Hybridgehäuses 90 des Hybridmoduls 2, an der sich die Antriebswelle 3 über das dritte Wälzlager 94 abstützt, eine Fluidzufuhrleitung 91. Diese Fluidzufuhrleitung 91 verläuft von radial außen nach radial innen und ist dort strömungstechnisch mit dem Zufuhrelement 42 verbunden. Die Keilwellenverzahnung 46 der Antriebswelle 3 steht in Eingriff mit einem Ausgangselement 81 einer hier nicht dargestellten Verbrennungskraftmaschine und fungiert damit als eine Anschlusseinrichtung 80 zum Anschluss des Hybridmoduls 2 bzw. der elektrischen Antriebseinheit 1 an der Verbrennungskraftmaschine.

Die Abtriebswelle 70 weist an ihrem zweiten axialen Endabschnitt 72 ebenfalls eine Keilwellenverzahnung 82 auf, mit welcher die Abtriebswelle 70 zwecks Drehmomentübertragung mit einem Eingangselement 83 eines hier nicht dargestellten Getriebes verbindbar ist.

Demnach bilden die Keilwellenverzahnung 46 der Antriebswelle 3 eine Eingangsseite des Hybridmoduls 2 und die Keilwellenverzahnung 82 der Abtriebswelle 70 eine Ausgangsseite des Hybridmoduls 2.

Ein von der Verbrennungskraftmaschine bereitgestelltes Drehmoment kann somit über die Anschlusseinrichtung 80 auf die Antriebswelle 3 und damit an die erste Rotationsmaschine 50 übertragen werden, beispielsweise zwecks Generierung von elektrischer Energie mittels Betreiben der ersten Rotationsmaschine 50 in einem Generator-Betrieb. Bei geöffneter Kupplungseinrichtung 60 kann die zweite Rotationsmaschine 52 als Antriebseinheit ein mit dem Hybridmodul 2 ausgestattetes Hybridfahrzeug rein elektrisch antreiben. Bei geschlossener Kupplungseinrichtung 60 können die beiden elektrischen Rotationsmaschinen 50, 52, ggf. zusammen mit der Verbrennungskraftmaschine, das mit dem Hybridmodul 2 ausgestattetes Hybridfahrzeug gemeinsam in einem Boost-Modus antreiben.

Der Fluss bzw. die Flussrichtung des Fluids im Hybridmodul 2 ist hier in Form von Pfeilen verdeutlicht.

Ein durch die Fluidzufuhrleitung 92 geleitetes Fluid zur Kühlung und/oder Schmierung wird an das Zufuhrelement 42 und folglich durch den Fluid-Einlass 20 in den zentralen Strömungskanal 10 der Antriebswelle 3 übertragen. Das Fluid wird von dort über den ersten radialen Auslass 21 der Antriebswelle 3 an die erste Rotationsmaschine 50 übertragen, über den zweiten radialen Auslass 22 der Antriebswelle 3 an die Kupplungseinrichtung 60 übertragen, über den dritten radialen Auslass 23 der Antriebswelle 3 und die radiale Öffnung 73 der Abtriebswelle 70 an die zweite Rotationsmaschine 52 übertragen, über den weiteren radialen Auslass 25 der Antriebswelle 3 an ein weiteres Aggregat der elektrischen Antriebseinheit 1 bzw. des Hybridmoduls 2 übertragen und schließlich über den endseitigen Auslass 24 an das Getriebe übertragen. Die Querschnittserweiterung gewährleistet dabei den Transport von Fluid auch zu den axial am weitesten von Fluid-Einlass 20 entferntesten Auslässen.

Mit der erfindungsgemäßen elektrischen Antriebseinheit sowie dem damit ausgestatteten Hybridmodul und einer das Hybridmodul umfassenden Antriebsanordnung lässt sich in kostengünstiger Weise ein optimaler Kühl- und/oder Schmierfluidtransport gewährleisten.
- 43: radiale Aufweitung
- 44: Vorsprung
- 45: Lamellenführung
- 46: Keilwellenverzahnung der Antriebswelle
- 47: axiale Nut

- 50: erste Rotationsmaschine
- 51: Rotor der ersten Rotationsmaschine
- 52: zweite Rotationsmaschine
- 53: Rotor der zweiten Rotationsmaschine

- 60: Kupplungseinrichtung
- 61: Eingangsseite der Kupplungseinrichtung
- 62: Ausgangsseite der Kupplungseinrichtung

- 70: Abtriebswelle
- 71: erster axialer Endabschnitt der Abtriebswelle
- 72: zweiter axialer Endabschnitt der Abtriebswelle
- 73: radiale Öffnung der Abtriebswelle

- 80: Anschlusseinrichtung
- 81: Ausgangselement der Verbrennungskraftmaschine
- 82: Keilwellenverzahnung der Abtriebswelle
- 83: Eingangselement des Getriebes

- 90: Hybridgehäuse
- 91: Fluidzufuhrleitung
- 92: erstes Wälzlager
- 93: zweites Wälzlager
- 94: drittes Wälzlager
- 95: viertes Wälzlager

## Patentansprüche

1. Elektrische Antriebseinheit (1), insbesondere als Bestandteil eines Hybridmoduls (2) oder eines Hybridgetriebes, umfassend eine Antriebswelle (3) sowie eine erste elektrische Rotationsmaschine (50), deren Rotor (51) drehfest mit der Antriebswelle (3) gekoppelt ist, und eine zweite elektrische Rotationsmaschine (52), wobei die Antriebswelle (3) an einem ersten stirnseitigen Endbereich (11) einen Fluid-Einlass (20) aufweist sowie damit über einen zentralen Strömungskanal (10) gekoppelt wenigstens einen ersten radialen Auslass (21) und wenigstens einen endseitigen Auslass (24) aufweist, wobei der erste radiale Auslass (21) derart positioniert ist, dass durch diesen ersten radialen Auslass (21) Fluid der ersten elektrischen Rotationsmaschine (50) zwecks deren Kühlung und/oder Schmierung zuführbar ist, wobei der zentrale Strömungskanal (10) zumindest im Verlauf vom ersten radialen Auslass (21) zu einem endseitigen Auslass (24) eine Querschnittserweiterung aufweist, sodass im zentralen Strömungskanal (10) befindliches Fluid im Bereich des endseitigen Auslasses (24) auf Grund des vergrößerten Abstandes zur Rotationsachse (4) der Antriebswelle (3) einer erhöhten Zentrifugalkraft ausgesetzt ist, wobei der erste radiale Auslass (21) strömungstechnisch mit einem ersten zylinderförmigen Abschnitt (32) verbunden ist, wobei axial daneben ein zweiter zylinderförmiger Abschnitt (33) mit einem größeren Durchmesser bzw. Querschnitt als der erste zylinderförmige Abschnitt (32) angeordnet und strömungstechnisch axial mit einem zweiten radialen Auslass (22) verbunden ist, wobei axial benachbart in Richtung der Flussrichtung des Fluids ein dritter zylinderförmiger Abschnitt (34) mit einem größeren Durchmesser bzw. Querschnitt als der zweite zylinderförmige Abschnitt (33) angeordnet und strömungstechnisch axial mit einem dritten radialen Auslass (23) zur Ausbringung von Fluid zu der zweiten elektrischen Rotationsmaschine (52) verbunden ist, wobei ein vierter zylinderförmiger Abschnitt (35) an einem zweiten stirnseitigen Endbereich (12) der Antriebswelle (3) angeordnet ist und einen größeren Durchmesser bzw. Querschnitt auf als der dritte zylinderförmige Abschnitt (34) aufweist, wobei der endseitige Auslass (24) durch den vierten zylinderförmigen Abschnitt (35) ausgebildet ist, und wobei die Querschnittserweiterung zumindest abschnittsweise über die Länge des zentralen Strömungskanals (10) durch stufenweise Erweiterung (31) des zentralen Strömungskanals (10) realisiert ist.

2. Elektrische Antriebseinheit (1) nach Anspruch 1,
**dadurch gekennzeichnet, dass** der Querschnitt des zentralen Strömungskanals (10) rund ist und die Differenz Di zwischen dem Durchmesser des zentralen Strömungskanals (10) am Fluid-Einlass (20) und dem Durchmesser des zentralen Strömungskanals (10) am endseitigen Auslass (24) in Bezug zur Länge L des zentralen Strömungskanals (10) zwischen dem Fluid-Einlass (20) und dem endseitigen Auslass (24) in folgendem Verhältnis steht: $Di / L = 0 , 4 … 5 .$

3. Elektrische Antriebseinheit (1) nach Anspruch 1 oder 2,
**dadurch gekennzeichnet, dass** der zweite radiale Auslass (22) zur Ausbringung von Fluid zu einer Kupplungseinrichtung (60) vorgesehen ist.

4. Hybridmodul (2) für ein Kraftfahrzeug, insbesondere für ein Hybridkraftfahrzeug, zum Ankoppeln einer Verbrennungskraftmaschine, umfassend eine elektrische Antriebseinheit (1) gemäß einem der Ansprüche 1 bis 3 sowie eine Anschlusseinrichtung (80) zum Anschluss einer Verbrennungskraftmaschine.

5. Hybridmodul nach Anspruch 4,
**dadurch gekennzeichnet, dass** dieses des Weiteren eine Kupplungseinrichtung (60) und/oder eine zweite elektrische Rotationsmaschine (52) umfasst, wobei die Kupplungseinrichtung (60) bzw. die zweite elektrische Rotationsmaschine (52) derart auf der Antriebswelle (3) angeordnet ist, dass mittels wenigstens eines radialen Auslasses (21, 22, 23) der Antriebswelle (3) der Kupplungseinrichtung (60) bzw. der zweiten elektrischen Rotationsmaschine (52) Fluid zwecks Kühlung und/oder Schmierung der Kupplungseinrichtung (60) bzw. der zweiten elektrische Rotationsmaschine (52) zuführbar ist.

6. Antriebsanordnung für ein Kraftfahrzeug, umfassend ein Hybridmodul (2) gemäß wenigstens einem der Ansprüche 4 und 5 sowie ein Antriebsaggregat, insbesondere eine Verbrennungskraftmaschine, sowie ein Getriebe, wobei das Hybridmodul (2) mit einer Eingangsseite mit dem Antriebsaggregat und mit einer Ausgangsseite mit dem Getriebe mechanisch gekoppelt ist.

## Claims

1. An electric drive unit (1), in particular as a component of a hybrid module (2) or a hybrid transmission, comprising a drive shaft (3), a first electric rotary machine (50), the rotor (51) of which is rotationally coupled to the drive shaft (3), and a second electric rotary machine (52), wherein the drive shaft (3) has a fluid inlet (20) at a first end-face end region (11) and is coupled thereto via a central flow channel (10) with at least one first radial outlet (21) and at least one end-face outlet (24), wherein the first radial outlet (21) is positioned such that fluid can be supplied to the first electric rotary machine (50) for cooling and/or lubrication through this first radial outlet (21), wherein the central flow channel (10) has a cross-sectional expansion at least along the path from the first radial outlet (21) to an end-face outlet (24), such that fluid located in the central flow channel (10) is subjected to an increased centrifugal force in the region of the end-face outlet (24) due to the increased distance from the axis of rotation (4) of the drive shaft (3), wherein the first radial outlet (21) is fluidically connected to a first cylindrical section (32), wherein a second cylindrical section (33) with a larger diameter or cross-section than the first cylindrical section (32) is arranged axially adjacent thereto and is fluidically axially connected to a second radial outlet (22), wherein, axially adjacent in the direction of fluid flow, a third cylindrical section (34) with a larger diameter or cross-section than the second cylindrical section (33) is arranged and is fluidically connected axially to a third radial outlet (23) for delivering fluid to the second electric rotary machine (52), wherein a fourth cylindrical section (35) is arranged at a second end-face end region (12) of the drive shaft (3) and has a larger diameter or cross-section than the third cylindrical section (34), wherein the end-face outlet (24) is formed by the fourth cylindrical section (35), and wherein the cross-sectional expansion is realised at least in sections over the length of the central flow channel (10) by stepwise extension (31) of the central flow channel (10).

2. The electric drive unit (1) according to claim 1,
**characterised in that** the cross-section of the central flow channel (10) is round and the difference Di between the diameter of the central flow channel (10) at the fluid inlet (20) and the diameter of the central flow channel (10) at the end outlet (24) is in the following ratio to the length L of the central flow channel (10) between the fluid inlet (20) and the end outlet (24): $Di / L = 0.4 … 5 .$

3. The electric drive unit (1) according to claim 1 or 2,
**characterised in that** the second radial outlet (22) is provided for delivering fluid to a coupling device (60).

4. A hybrid module (2) for a motor vehicle, in particular for a hybrid motor vehicle, for coupling an internal combustion engine, comprising an electric drive unit (1) according to any one of claims 1 to 3 and a connection device (80) for connecting an internal combustion engine.

5. The hybrid module according to claim 4,
**characterised in that** it further comprises a coupling device (60) and/or a second electric rotary machine (52), wherein the coupling device (60) or the second electric rotary machine (52) is arranged on the drive shaft (3) such that fluid can be supplied to the coupling device (60) or the second electric rotary machine (52) for cooling and/or lubrication of the coupling device (60) or the second electric rotary machine (52) by means of at least one radial outlet (21, 22, 23) of the drive shaft (3).

6. A drive assembly for a motor vehicle, comprising a hybrid module (2) according to at least one of claims 4 and 5 and a drive unit, in particular an internal combustion engine, and a transmission, wherein the hybrid module (2) is mechanically coupled to the drive unit at an input side and to the transmission at an output side.

## Revendications

1. Unité d'entraînement électrique (1), en particulier en tant qu'élément constitutif d'un module hybride (2) ou d'une transmission hybride, comprenant un arbre d'entraînement (3), une première machine rotative électrique (50) dont le rotor (51) est accouplé solidaire en rotation à l'arbre d'entraînement (3), et une seconde machine rotative électrique (52), l'arbre d'entraînement (3) présentant, au niveau d'une première zone d'extrémité côté avant (11), une entrée de fluide (20) ainsi qu'au moins une première sortie radiale (21) et au moins une sortie côté extrémité (24) accouplées à celle-ci par l'intermédiaire d'un canal d'écoulement central (10), la première sortie radiale (21) étant positionnée de telle sorte que le fluide de la première machine électrique rotative (50) puisse être acheminé afin de la refroidir et/ou de la lubrifier à travers cette première sortie radiale (21), le canal d'écoulement central (10) présentant un élargissement de section transversale au moins sur le trajet allant de la première sortie radiale (21) à une sortie côté extrémité (24), de telle sorte que le fluide se trouvant dans le canal d'écoulement central (10) soit soumis, dans la zone de la sortie côté extrémité (24), à une plus grande force centrifuge en raison de la distance accrue par rapport à l'axe de rotation (4) de l'arbre d'entraînement (3), la première sortie radiale (21) étant reliée, du point de vue de la mécanique des fluides, à une première section de forme cylindrique (32), à côté de laquelle, dans le sens axial, est disposée une deuxième section de forme cylindrique (33) présentant un diamètre ou une section transversale plus grands que ceux de la première section de forme cylindrique (32), et étant reliée axialement, du point de vue de la mécanique des fluides, à une deuxième sortie radiale (22), une troisième section de forme cylindrique (34) étant disposée axialement à côté dans le sens d'écoulement du fluide et présentant un diamètre ou une section transversale plus grands que la deuxième section de forme cylindrique (33), étant reliée axialement, du point de vue de la mécanique des fluides, à une troisième sortie radiale (23) destinée à acheminer le fluide vers la seconde machine électrique rotative (52), une quatrième section de forme cylindrique (35) étant disposée au niveau d'une deuxième zone d'extrémité côté avant (12) de l'arbre d'entraînement (3) et présentant un diamètre ou une section transversale plus grands que ceux de la troisième section de forme cylindrique (34), la sortie côté 'extrémité (24) étant formée par la quatrième section de forme cylindrique (35), et l'élargissement de section transversale étant réalisé, au moins par sections, sur la longueur du canal d'écoulement central (10) par un élargissement progressif (31) du canal d'écoulement central (10).

2. Unité d'entraînement électrique (1) selon la revendication 1,
**caractérisée en ce que** la section transversale du canal d'écoulement central (10) est circulaire et la différence Di entre le diamètre du canal d'écoulement central (10) à l'entrée de fluide (20) et le diamètre du canal d'écoulement central (10) à la sortie côté extrémité (24) se situe dans le rapport suivant par rapport à la longueur L du canal d'écoulement central (10) entre l'entrée de fluide (20) et la sortie côté extrémité (24) : $Di / L = 0 , 4 … 5 .$

3. Unité d'entraînement électrique (1) selon la revendication 1 ou 2,
**caractérisée en ce que** la deuxième sortie radiale (22) est prévue pour l'acheminement du fluide vers un dispositif d'accouplement (60).

4. Module hybride (2) pour un véhicule automobile, en particulier pour un véhicule automobile hybride, pour accoupler un moteur à combustion interne, comprenant une unité d'entraînement électrique (1) selon l'une des revendications 1 à 3 et un dispositif de raccordement (80) pour raccorder un moteur à combustion interne.

5. Module hybride selon la revendication 4,
**caractérisé en ce qu'**il comprend en outre un dispositif d'accouplement (60) et/ou une seconde machine rotative électrique (52), dans lequel le dispositif d'accouplement (60) ou la seconde machine rotative électrique (52) sont disposés sur l'arbre d'entraînement (3), de telle sorte que du fluide puisse être fourni au dispositif d'accouplement (60) ou à la seconde machine rotative électrique (52) pour refroidir et/ou lubrifier le dispositif d'accouplement (60) ou la seconde machine rotative électrique (52) au moyen d'au moins une sortie radiale (21, 22, 23) de l'arbre d'entraînement (3).

6. Ensemble d'entraînement pour un véhicule automobile, comprenant un module hybride (2) selon au moins l'une des revendications 4 et 5 et une unité d'entraînement, en particulier un moteur à combustion interne, et une transmission, dans lequel le module hybride (2) est accouplé mécaniquement au groupe d'entraînement du côté entrée et à la transmission du côté sortie.
